# EUROPEAN PATENT APPLICATION

(11) **EP 3 419 272 A1**
(43) Date of publication of application: **26.12.2018**
(21) Application number: 18176267.5
(22) Date of filing: 06.06.2018
(51) Int. Cl.: H04N 1/00, G07F 17/26

(54) **IMAGE PROCESSING MACHINE, IN-STORE IMAGE PROCESSING SYSTEM, AND IMAGE PROCESSING METHOD**

(30) Priority: 20.06.2017 JP 2017120629
(71) Applicant: Toshiba Tec Kabushiki Kaisha, Shinagawa-ku Tokyo 141-0032 (JP); Kabushiki Kaisha Toshiba, Minato-ku Tokyo (JP)
(72) Inventor: Ozawa, Kazuyuki, Tokyo, 141-8562 (JP)
(74) Representative: Hoffmann Eitle

(57) **Abstract**

An image processing machine with usage tracking includes a communication interface, a document table having a document placement surface, a scanner configured to read an image of a document placed on the document placement surface, and a processor that is configured to determine whether or not the document is set on the document placement surface upon receiving an instruction to perform image reading by the scanner, and transmit a thumbnail image that is processed from the image read by the scanner upon determining that the document is determined to be not set on the document placement surface, to a processing device through the communication interface, so as to improve the usage tracking feature of the image processing machine.

## Description

### CROSS-REFERENCE TO RELATED APPLICATION

This application is based upon and claims the benefit of priority from Japanese Patent Application No. 2017-120629, filed June 20, 2017, the entire contents of which are incorporated herein by reference.

### FIELD

Embodiments described herein relate generally to an image processing machine, an in-store image processing system, and an image processing method.

### BACKGROUND

At stores such as convenience stores, an image processing device, such as a digital multi-function peripheral with which a user executes copying or scanning by paying a fee based on a usage amount, may be installed. At such a store, for example, the fee is collected according to the number of copies executed by the image processing device. In the image processing device, incorrect processing results may be output due to the user's operation error or the like. For example, if the user forgets to set an original document and instructs to copy, the image processing device outputs a blank sheet as a result of the copy. In the system of the related art, even when the copy is executed without having set the original document, the fee for the copy processing is charged. In addition, in the related art, there have been occasions where an operation of asking a clerk of the store for a refund or discount of a copy fee on failed copies due to a mistake by the user. However, has a problem that it is difficult the clerk of the store to confirm the failed copies.

### SUMMARY

One of the objects of the present invention is to improve prior art techniques and overcome at least some of the prior art problems as for instance above illustrated.

According to a first aspect of the invention, it is provided an image processing machine with usage tracking comprising:
a communication interface;
a document table having a document placement surface;
a scanner configured to read an image of a document placed on the document placement surface; and
a processor that is configured to determine whether or not the document is set on the document placement surface upon receiving an instruction to perform image reading by the scanner, and transmit a thumbnail image that is processed from the image read by the scanner upon determining that the document is determined to be not set on the document placement surface, to a processing device through the communication interface, so as to improve the usage tracking feature of the image processing machine.

Optionally, according to the first aspect of the invention, the image processing machine further comprises:
a printer,
wherein the processor is configured to control the printer to output a sheet on which information indicating that image processing has been executed in a state in which the original is not set on the document placement surface during the image reading by the scanner.

Optionally, according to the first aspect of the invention, the image processing machine further comprises:
a cover that opens to expose the document table and closes to cover the document table; and
a sensor configured to detect opening and closing of the cover,
wherein the processor determines that the original is not set on the document placement surface based on outputs from the sensor.

Optionally, according to the first aspect of the invention, the image processing machine further comprises:
a display device,
wherein the processor is configured to cause a warning to be displayed on the display device upon determining that that the original is not set on the document placement surface.

Optionally, according to the first aspect of the invention, the processor is configured to transmit a thumbnail image of a document that is set on the document placement surface to said processing device through the communication interface.

Optionally, according to the first aspect of the invention, the next image reading performed in sequence by the scanner after the image reading when the document is not set on the document placement surface, is the image reading on the document that is set on the document placement surface.

According to a second aspect of the invention, it is provided an image processing system comprising:
an image processing machine configured to perform image processing with usage tracking; and
a point-of-sale (POS) terminal that is connected to the image processing machine through a network,
wherein the image processing machine includes
   a communication interface;
   a document table having a document placement surface;
   a scanner configured to read an image of a document placed on the document placement surface; and
   a processor that is configured to determine whether or not the document is set on the document placement surface upon receiving an instruction to perform image reading by the scanner, and transmit a thumbnail image that is processed from the image read by the scanner upon determining that the document is determined to be not set on the document placement surface, to the POS terminal through the communication interface, so as to improve the usage tracking feature of the image processing machine.

Optionally, according to the second aspect of the invention, the image processing machine further comprises:
a printer,
wherein the processor is configured to control the printer to output a sheet on which information indicating that image processing has been executed in a state in which the original is not set on the document placement surface during the image reading by the scanner.

Optionally, according to the second aspect of the invention, the image processing machine further comprises:
a cover that opens to expose the document table and closes to cover the document table; and
a sensor configured to detect opening and closing of the cover,
wherein the processor determines that the original is not set on the document placement surface based on outputs from the sensor.

Optionally, according to the second aspect of the invention, the image processing machine further comprises:
a display device,
wherein the processor is configured to cause a warning to be displayed on the display device upon determining that that the original is not set on the document placement surface.

Optionally, according to the second aspect of the invention, the processor is configured to transmit a thumbnail image of a document that is set on the document placement surface to said processing device through the communication interface.

Optionally, according to the second aspect of the invention, the next image reading performed in sequence by the scanner after the image reading when the document is not set on the document placement surface, is the image reading on the document that is set on the document placement surface.

According to a third aspect of the invention, it is provided an image processing method carried out in an image processing machine with usage tracking, the image processing machine including a communication interface, a document table having a document placement surface, and a scanner configured to read an image of a document placed on the document placement surface, said method comprising:
scanning the document placement surface and generating a read image as a result of the scanning;
determining whether or not the document is set on the document placement surface during the scanning; and
transmitting a thumbnail image that is processed from the read image upon determining that the document is determined to be not set on the document placement surface during the scanning, to a processing device through the communication interface, so as to improve the usage tracking feature of the image processing machine.

Optionally, according to the third aspect of the invention, the image processing machine further comprises a printer, and said method further comprises:
controlling the printer to output a sheet on which information indicating that image processing has been executed in a state in which the original is not set on the document placement surface during the scanning.

Optionally, according to the third aspect of the invention, the image processing machine further comprises a cover that opens to expose the document table and closes to cover the document table, and a sensor configured to detect opening and closing of the cover, and the original is determined to be not set on the document placement surface based on outputs from the sensor.

Optionally, according to the third aspect of the invention, the image processing machine further comprises a display device, and said method further comprises:
displaying a warning message on the display device upon determining that that the original is not set on the document placement surface.

Optionally, according to the third aspect of the invention, the method further comprises:
transmitting a thumbnail image of a document that is set on the document placement surface to said processing device through the communication interface.

Optionally, according to the third aspect of the invention, the next scanning performed in sequence after the scanning performed when the document is not set on the document placement surface, is the scanning performed when the document is set on the document placement surface.

### DESCRIPTION OF THE DRAWINGS

FIG. 1 is a block diagram showing an example of an in-store system according to a first embodiment.
FIG. 2 is a flowchart illustrating an operation of an image processing device according to the first embodiment.

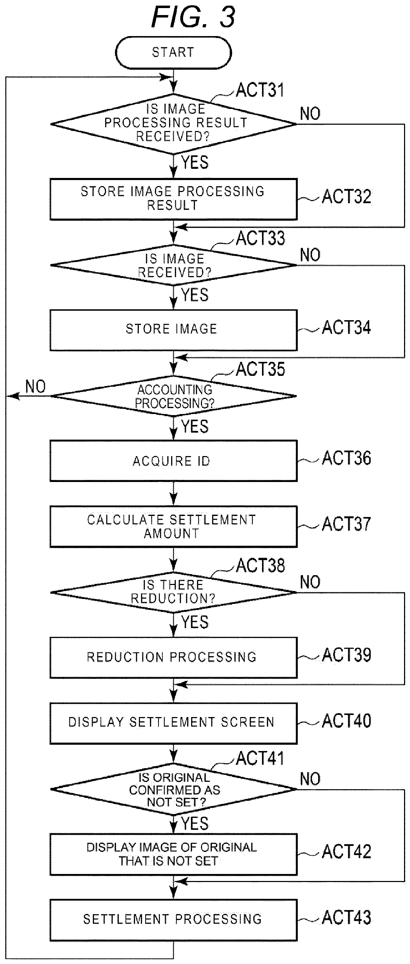

FIG. 3 is a flowchart illustrating an operation of a POS terminal according to the first embodiment.
FIGS. 4 and 5 are example screens displayed on a display device of the POS terminal according to the first embodiment.
FIG. 6 is a block diagram showing an example of an in-store system according to a second embodiment.
FIG. 7 is a flowchart illustrating an operation of an image processing device according to the second embodiment.

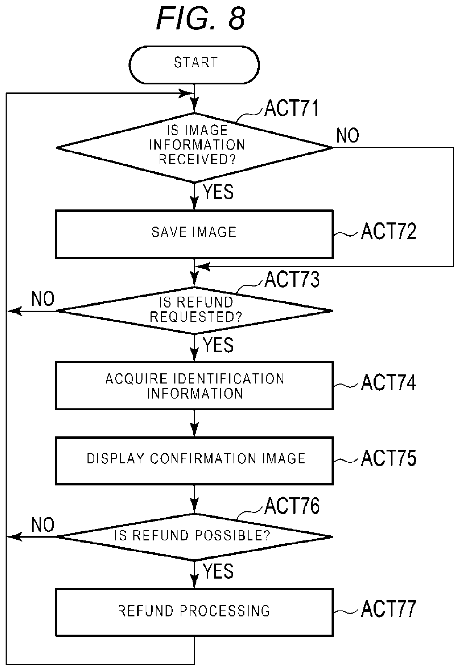

FIG. 8 is a flowchart illustrating an operation of a POS terminal according to the second embodiment.

### DETAILED DESCRIPTION

In order to solve the above problem, embodiments provide an image processing machine, an in-store image processing system, and an image processing method, all capable of providing confirmation that image processing to be charged has failed.

According to an embodiment, the image processing machine with usage tracking includes a communication interface, a document table having a document placement surface, a scanner configured to read an image of a document placed on the document placement surface, and a processor that is configured to determine whether or not the document is set on the document placement surface upon receiving an instruction to perform image reading by the scanner, and transmit a thumbnail image that is processed from the image read by the scanner upon determining that the document is determined to be not set on the document placement surface, to a processing device through the communication interface, so as to improve the usage tracking feature of the image processing machine.

Hereinafter, first and second embodiments will be described with reference to drawings.

### First Embodiment

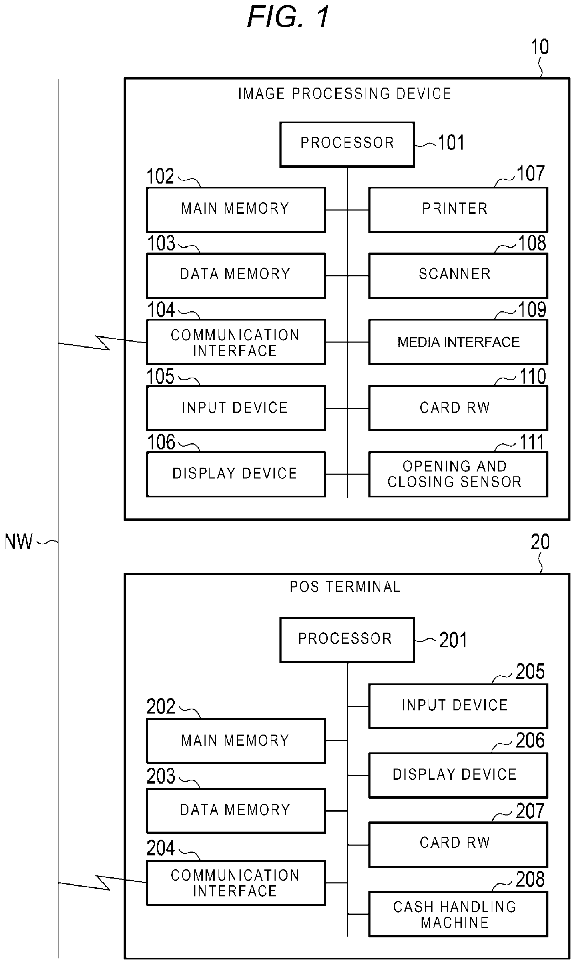

First, an in-store system 1 according to the first embodiment will be described. FIG. 1 is a block diagram showing an example of the in-store system 1 according to the first embodiment. The in-store system 1 includes an image processing device 10 and a point of sale (POS) terminal 20 as a settlement processing device. The image processing device 10 and the POS terminal 20 are connected via a network NW. The in-store system 1 is installed at, for example, a store such as a convenience store, a supermarket, a store-type printing company or other stores. In the in-store system 1, any number of the image processing device 10 and the POS terminal 20 may be set, and a plurality of each may be installed.

The image processing device 10 performs image processing such as print, scan, and copy. The image processing device 10 is, for example, a digital multi-function peripheral (MFP), a multi-copy machine, a scanner device, or the like. In the in-store system 1, it is assumed that the image processing device 10 is operated to execute image processing to be charged according to a user's own operation. In addition, in the present embodiment, the image processing to be charged by the image processing device 10 includes processing of reading an image by a scanner.

The POS terminal 20 is a settlement processing device that performs settlement of a fee. In this in-store system 1, it is assumed that the POS terminal 20 is operated by a clerk or the like of the store. However, the POS terminal 20 may be a self-checkout device operated by the user himself and herself. The POS terminal 20 has a function to settle the fee for image processing executed by the image processing device 10. For example, the POS terminal 20 settles a usage fee for image processing (for example, copy or scan) executed by the image processing device 10 based on an ID given to the user.

The network NW is, for example, a local area network (LAN) . In addition, the network NW may include a wide area network (WAN) . The network NW may be a wireless line or a wired line. In addition, wireless network and wired lines may be mixed in the network NW.

Next, the configuration of the image processing device 10 according to the first embodiment will be described in detail. As shown in FIG. 1, the image processing device 10 includes a processor 101, a main memory 102, a data memory 103, a communication interface 104, an input device 105, a display device 106, a printer 107, a scanner 108, a media interface (IF) 109, a card reader and writer (RW) 110, an opening and closing sensor 111, and the like.

The processor 101 is, for example, a central processing unit (CPU) . The processor 101 is connected to each unit in the image processing device 10 via a bus. The processor 101 is a control unit configured to control the image processing device 10, data processing, and the like. The processor 101 carries out various kinds of processes, such as operation control and data processing, by executing a program stored in the main memory 102 or the data memory 103. For example, the processor 101 controls a basic operation of the image processing device 10 by executing a program of an operating system (OS). In addition, the processor 101 carries out various kinds of processing functions by executing application programs.

The main memory 102 includes a memory device such as a RAM and a ROM. For example, the ROM stores various kinds of programs such as an OS program or an application program. In addition, the RAM is used, for example, as a work area for temporarily storing data to be used. The processor 101, the main memory 102, and the interface for connecting each unit are implemented as a control unit of the image processing device 10.

The data memory 103 is a rewritable nonvolatile memory. The data memory 103 includes a memory device such as a hard disk drive (HDD), a solid-state drive (SSD) or an electric erasable programmable read-only memory (EEPROM®), for example. The data memory 103 may store an OS or an application program. In addition, the data memory 103 stores data generated by processes executed by the processor 101 and the like. In addition, the data memory 103 stores data to be used in various processes executed by the processor 101.

The main memory 102 or the data memory 103 stores various programs that are executed to carry out various processes of the image processing device 10 to be described later. For example, a control program such as an application program may be stored in the data memory 103. The processor 101 may store a program that is received via the communication interface 104, in the data memory 103. In addition, the program to be stored in the data memory 103 may be acquired from a recording medium such as a magnetic disk, a magneto-optical disk, an optical disk, a semiconductor memory, or the like.

The communication interface 104 is an interface for allowing the image processing device 10 to communicate with the POS terminal 20 via the network NW. The input device 105 receives an operation by an operator of the image processing device 10. The input device 105 includes, for example, a keyboard, a numeric keypad, a touch key, and the like. The display device 106 displays information. The display device 106 is, for example, a display including a liquid crystal display or an organic electro-luminescence (EL) display. In addition, the input device 105 and the display device 106 may be implemented as a display panel having a touch panel. The input device 105 and the display device 106 may be parts of an operation panel of the image processing device 10.

The printer 107 prints an image on a recording medium such as paper. The printer 107 is not limited to a printer that employs a specific image forming method. The printer 107 may employ an electrophotographic method, an inkjet method, or a thermal transfer method. In the present embodiment, it is assumed that the printer 107 is an electrophotographic type printer.

The scanner 108 optically reads an image. The scanner 108 optically scans an image of an original document to acquire image information. The scanner 108 includes, for example, an image pickup element such as a charge-coupled device (CCD) image sensor. The scanner 108 may read an image by other methods. It is assumed that the scanner 108 reads the image of a document placement surface of a document table on which the original document is placed.

A storage device of the user is communicatively connected to the media IF 109. The media IF 109 reads data from and writes data to the storage device that is connected thereto. For example, the media IF 109 writes the image read by the scanner 108 to the storage device. A portable terminal (mobile phone, smartphone, tablet PC, and the like), a portable storage device (Universal Serial Bus (USB) memory, and the like), and a card-type storage device (IC card or memory card) are each an example of the storage device to which the media IF 109 can be connected to. The media IF also may be a device that reads and writes data to and from a storage medium such as an optical disk.

The card reader and writer (RW) 110 reads data from and writes data to a card presented by the user. The card RW 110 has a function of reading the ID from the card presented by the user using the image processing device 10. For example, it is assumed that the card RW 110 corresponds to a contact type IC card, a non-contact type IC card, or a card such as a magnetic card. The card RW 110 is connected to the processor 101 via an interface.

The opening and closing sensor 111 is a sensor for detecting the opening and closing state of a document table cover that may be opened and closed to cover the document table on which an original document is placed. That is, the image processing device 10 includes the document table, the document table cover, and the opening and closing sensor 111. For example, the document table includes a document placement surface, such as glass and the like. The scanner 108 is installed below the document table. The document placement surface (e.g., the glass surface) of the document table is set so that the reading surface of the original document faces the lower side (scanner 108 side) . The scanner 108 optically scans the document placement surface of the document table to read the image of the reading surface of the original document.

The document table cover is disposed above the document table and has a mechanism that may be opened and closed by the operation of the user. The document table cover is configured to cover the entire document placement surface on the document table in a closed state. When setting the original document on the document table, the operator places the original document on the document table with the document table cover open and closes the document table cover with the original document placed on the document table. Therefore, when performing a normal operation, the state in which the original document is set in the document table may be detected by the change of the opening and closing state of the document table cover detected by the opening and closing sensor 111.

The processor 101 has a function of detecting that the original document is set in the document table (state in which the original document is set) by the change of the opening and closing state of the document table cover detected by the opening and closing sensor 111. However, the function of detecting the state in which the original document is set is not limited to detection based on the opening and closing state of the document table cover detected by the opening and closing sensor 111. For example, a photo interrupter may detect whether or not the original document exists on the document placement surface of the document table.

Next, the configuration of the POS terminal 20 according to the first embodiment will be described. In the configuration example shown in FIG. 1, the POS terminal 20 includes a processor 201, a main memory 202, a data memory 203, a communication interface 204, an input device 205, a display device 206, a card reader and writer (RW) 207, and a cash handling machine 208.

The processor 201 is, for example, a CPU. The processor 201 connects to each unit within the POS terminal 20 via a bus. The processor 201 performs control of the POS terminal 20, data processing, and the like. The processor 201 carries out various processes such as operation control and data processing by executing a program stored in the main memory 202 or the data memory 203. For example, the processor 201 controls the basic operation of the POS terminal 20 by executing the operating system (OS) program. In addition, the processor 201 carries out various kinds of processing functions by executing application programs.

The main memory 202 includes a memory device such as a RAM and a ROM. For example, the ROM stores various kinds of programs such as an OS program or an application program. In addition, the RAM is used, for example, as a work area for temporarily storing data to be used. The processor 201, the main memory 202, and the interface for connecting each unit are implemented as a control unit of the POS terminal 20.

The data memory 203 is a rewritable nonvolatile memory. The data memory 203 includes a memory device such as an HDD, an SSD, an EEPROM® or the like, for example. The data memory 203 may store an OS or an application program. In addition, the data memory 203 stores data generated by processes executed by the processor 201 and the like. In addition, the data memory 203 stores data to be used in various processes executed by the processor 201.

The main memory 202 or the data memory 203 stores various programs that are executed to carry out various processes of the POS terminal 20 to be described later. For example, a control program such as an application program may be stored in the data memory 203. For example, the processor 201 may store a program that is received via the communication interface 204 into the data memory 203. In addition, the control program to be stored in the data memory 203 may be acquired from a recording medium such as a magnetic disk, a magneto-optical disk, an optical disk, a semiconductor memory, or the like.

The communication interface 204 is an interface for allowing the POS terminal 20 to communicate with the image processing device 10 via the network NW. The input device 205 receives an operation from the clerk or the like who operates the POS terminal 20. The input device 205 includes, for example, a keyboard, a numeric keypad, a touch key, and the like. The display device 206 displays information. The display device 206 is, for example, a display including a liquid crystal display or an organic electro-luminescence (EL) display. In addition, the input device 205 and the display device 206 may be implemented as a display device having a touch panel.

The card reader and writer (RW) 207 reads data from and writes data to the card presented by the user. For example, the card RW 207 reads the ID from the card presented by the user. The card RW 207 is connected to the processor 201 via an interface.

The cash handling machine 208 processes cash to be received from the user. The cash handling machine 208 is connected to the processor 201 via an interface. The processor 201 controls the operation of the cash handling machine 208 and acquires information indicating the result of cash processing from the cash handling machine 208 and the like.

Next, an operation example of the in-store system 1 according to the first embodiment will be described. In the operation example of the first embodiment described below, an operation form is assumed in which the POS terminal 20 settles the fee for the image processing executed by the image processing device 10 by the user's operation. Therefore, after executing the image processing in the image processing device 10, the user pays the fee corresponding to the image processing executed by the POS terminal 20.

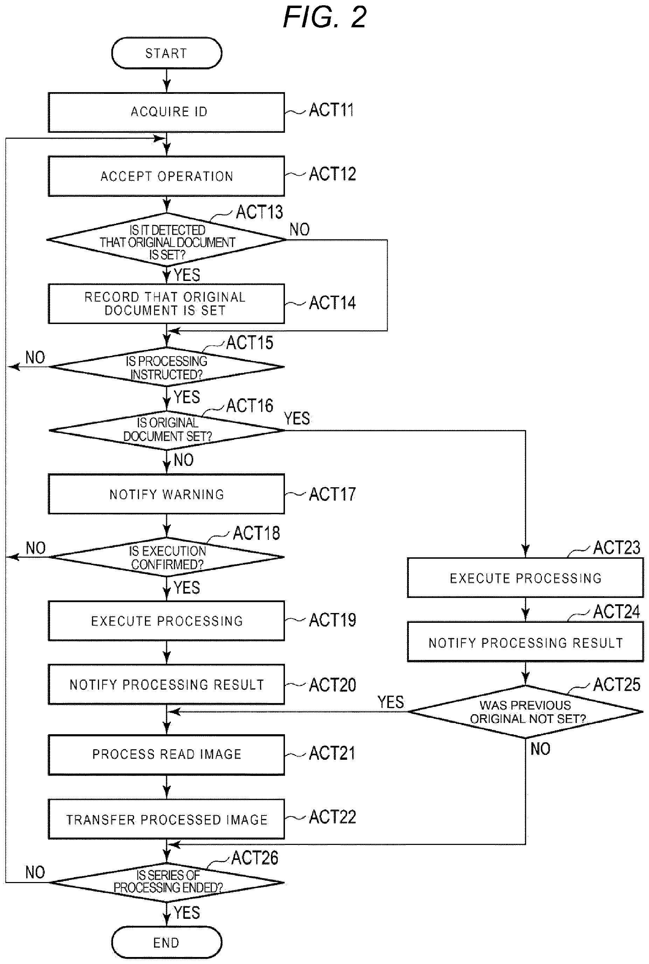

FIG. 2 is a flowchart for explaining an operation example of the image processing device 10 according to the first embodiment. In the first embodiment, the fee for image processing executed by the image processing device 10 is settled by the POS terminal 20. For this reason, settlement of a fee for image processing in the POS terminal 20 is realized by managing the image processing executed by the image processing device 10 in association with identification information (ID) . The identification information associated with the image processing may be information that associates the executed image processing with a settlement target in the POS terminal 20. In the following description, it is assumed that the identification information associated with the result of the image processing is an ID given to the user.

In a standby state, the processor 101 of the image processing device 10 acquires the ID input by the user (ACT 11) . For example, the processor 101 reads the ID of the user from the card presented by the user using the card RW 110. In addition, the processor 101 may acquire the ID input by the user using the input device 105 such as a touch panel or a numeric keypad. In addition, the ID is not limited to the ID of the user such as a member number or the like and may be identification information issued every time the user executes image processing or the like.

Upon acquiring the ID, the processor 101 receives an operation to execute various processes (ACT 12). In a state where an operation by the user has been received, the processor 101 detects whether or not the original document is set in the document table (ACT 13) . The processor 101 determines that the original document is set in the document table according to the change in a detection signal of the opening and closing sensor 111. In addition, the processor 101 may detect that the original document is set in the document table by another detection method. For example, the processor 101 may detect the state in which the original document is set based on a detection signal such as a sensor (for example, a sensor for detecting the original document size) that detects the presence or absence of the original document in the document placement surface.

When it is detected that the original document is set (ACT 13, YES), the processor 101 records information indicating that the original document is set in the main memory 102. For example, the processor 101 may set a flag (e.g., original document set flag) as information indicating that the original document is set in the main memory 102. In addition, the processor 101 may record the information (such as the setting of the original document set flag) indicating that the original document is in a state of being set in the data memory 103.

In addition, in a state where an operation by the user has been received, the processor 101 is able to receive an instruction to execute image processing from the user (ACT 15) . Here, a case where an instruction to execute image processing including image reading processing on the document placement surface (i.e., the original document position) by the scanner 108 is received, will be described. For example, the processor 101 receives an instruction to execute processes such as scanning or copying as input by the input device 105.

When receiving an execution instruction of the image processing (ACT 15, YES), the processor 101 refers to the main memory 102 and determines whether the original document is set (ACT 16).

If it is determined that the original document is in a state of being not set (ACT 16, NO), the processor 101 issues a warning that the original document is not set (ACT 17). For example, the processor 101 displays a warning screen indicating that the original document is not set on the display device 106 without executing the processing instructed to be executed. The processor 101 may also cause a warning sound to be produced with a speaker together with the warning screen.

In addition, the processor 101 prompts the user to provide the execution confirmation of the image processing, together with the display of the warning screen, and receives an execution confirmation instruction (ACT 18). If there is an execution confirmation instruction with the original document still not set (ACT 18, YES), the processor 101 executes a specified image processing even if the original document set is not detected (ACT 19) . When the image processing is normally completed, the processor 101 notifies the POS terminal 20 of information indicating the image processing result including information for charging for the image processing (ACT 20) . In this case, the image processing result includes the ID of the user and information indicating that the image processing is executed in a state in which the original document is not set.

In addition, when the image processing is executed with the original document still not set, the processor 101 processes the read image read by the scanner 108 in the image processing as an image for transfer (ACT 21). The image for transfer is an image to be transferred to the POS terminal 20 and an image for the clerk or the like to confirm the read image in the POS terminal 20. For example, the processor 101 converts a read image into a thumbnail image that the POS terminal 20 may display. In addition, the processor 101 may process a read image by lowering the resolution or the like to such an extent that the contents of the read image may not be comprehensible. Here, an image obtained by processing a read image for transfer to the POS terminal 20 is referred to as a thumbnail image.

After processing the read image, the processor 101 transfers image information for confirmation including the thumbnail image obtained by processing the read image to the POS terminal 20 through the network NW (ACT 22) . The processor 101 transfers the image information for confirmation in which predetermined information is added to the thumbnail image to the POS terminal 20. For example, the image information for confirmation includes a thumbnail image, an ID input by the user who instructs image processing, and information indicating that the image processing is executed without an original document. In addition, the image information for confirmation may include date and time at which the image processing is executed, information indicating the image processing device 10 that executes image processing, and the like.

In addition, when it is determined that the original document is set (ACT 16, YES), the processor 101 executes image processing instructed to be executed (ACT 23). When the image processing is normally completed, the processor 101 notifies the POS terminal 20 of information indicating the processing result including information for charging for image processing (ACT 24). In this case, the image processing result includes the ID of the user and information indicating that the image processing is executed with the original document set.

In this example of operation, when reading processing of the original document is executed in a state in which the original document is not set, the image read in the next reading processing is also transferred to the POS terminal 20 even though the image processing is executed with the original document being set. Therefore, when the image processing is executed with the original document is set, the processor 101 determines whether the original document is in a state of being not set in the immediately preceding image processing (ACT 25) . If it is determined that the original document is not set in the previous image processing (ACT 25, YES), the processor 101 processes the read image (ACT 21) and transfers the processed image (e.g., the thumbnail image) to the POS terminal 20 (ACT 22) .

The processor 101 may process the read images for all the image processing to be charged, generate thumbnail images, and transfer the thumbnail images to the POS terminal 20. In this case, in the POS terminal 20, it is possible to confirm the read images in all the image processing to be charged which is executed by the image processing device 10. In this case, in order to protect the privacy of the read images, the processor 101 may process the thumbnail images to such an extent that the contents of the read images may not be comprehensible.

In addition, the processor 101 receives an instruction to end processing by the user. When the user instructs the input device 105 to end the series of processing, the processor 101 determines to end the series of processing (ACT 26, YES). In this way, the processor 101 ends a series of processing by the user in accordance with the user's instruction and returns to the standby state.

As described above, in the image processing device according to the first embodiment, when execution of image processing is instructed with the original document not set, a warning that the original document is not set is issued. In this way, it is possible to prevent the start of the image processing in a state in which the original document is not set. In addition, when image processing is executed with the original document not set, the image processing device sends the image read in the image processing to the POS terminal as a settlement processing device. In this way, in the settlement processing in the POS terminal, it is possible to confirm the read image in the image processing executed with the original document not set.

In addition, the image processing device according to the first embodiment processes the read image by image processing and transfers the thumbnail image after the image processing to the POS terminal. Because the data size of the thumbnail image is small, the communication load may be reduced. In addition, by processing the thumbnail image to such an extent that the contents of the read image may not be comprehensible, it is possible to secure the privacy of the read image that may be viewed by the POS terminal.

Next, an operation example in the POS terminal 20 according to the first embodiment will be described. The processor 201 of the POS terminal 20 receives data from the image processing device 10 as appropriate and starts accounting processing at any timing. Here, it is assumed that the POS terminal 20 is operated by the clerk. For example, in the POS terminal 20, in accordance with a request from the user, accounting processing is executed according to the operation of the clerk.

When receiving the image processing result from the image processing device 10 (ACT 31, YES), the processor 201 saves the received image processing result in the data memory 203 (ACT 32). Here, it is assumed that the image processing result is information including information indicating the contents of the image processing to be charged and executed by the image processing device 10 and the ID of the user who executed. For example, based on the received image processing result, the processor 201 stores the information related to charging for image processing and the ID of the user in association with each other in the data memory 203.

In addition, the processor 201 receives the image information for confirmation including the thumbnail image obtained by processing the read image from the image processing device 10 as appropriate. When the image information for confirmation is received (ACT 33, YES), the processor 201 stores the received image information for confirmation in the data memory 203 (ACT 34). For example, the processor 201 stores the thumbnail image included in the image information for confirmation in the data memory 203 in association with the ID of the user. In addition, the processor 201 may store thumbnail images in the data memory 203 in association with IDs in order of date and time.

When performing accounting processing in response to a request from the user, the clerk instructs the input device 205 of the POS terminal 20 to start accounting processing. The processor 201 starts accounting processing in response to an instruction to start accounting processing (ACT 35). Here, it is assumed that accounting processing (also referred to herein as settlement processing) including payment of the fee for image processing executed by the user at least in the image processing device 10 is executed.

That is, the POS terminal 20 settles the fee for image processing associated with the ID. Therefore, the processor 201 acquires an ID of the user in accounting processing (ACT 36). For example, the processor 201 reads the ID of the user from the card presented by the user using the card RW 207. In addition, the processor 201 may acquire the ID input by using the input device 205.

When acquiring the ID of the user, the processor 201 calculates a settlement amount based on the image processing result corresponding to the acquired ID (ACT 37) . For example, the processor 201 extracts the image processing result corresponding to the acquired ID from the data memory 203. The processor 201 calculates a fee for image processing (copy, scan, and the like) executed by the image processing device 10 from the extracted image processing result.

In addition, the processor 201 may settle purchase prices of commodities other than the image processing collectively. In this case, the processor 201 registers commodities to be settled other than image processing and calculates the prices of the registered commodities and the like. After calculating the prices of the commodities to be settled, the processor 201 calculates the settlement amount by adding up the fee for the image processing corresponding to the ID and the prices for the commodities.

When calculating the settlement amount, the processor 201 determines whether image processing for which fee is to be reduced exists based on the image processing result corresponding to the acquired ID (ACT 38). Here, it is assumed that the fee for the image processing executed with the original document not set (without the original document) is reduced. Therefore, the processor 201 detects the image processing executed with the original document that is not set from the image processing result corresponding to the ID. When there is image processing executed with the original document not set, that is, when there is image processing for which fee is to be reduced (ACT 38, YES), the processor 201 performs reduction processing (ACT 39). For example, the processor 201 decreases a predetermined reduction amount for each image processing executed with the original document not set from the settlement amount. The amount to be reduced may be a predetermined amount per image processing executed with the original document not set.

When completing the reduction processing, the processor 201 displays a settlement screen indicating the settlement details on the display device 206 (ACT 40). For example, the processor 201 displays information indicating executed image processing to be settled, information indicating the contents of reduction, information on commodities to be settled, and the like on the settlement screen.

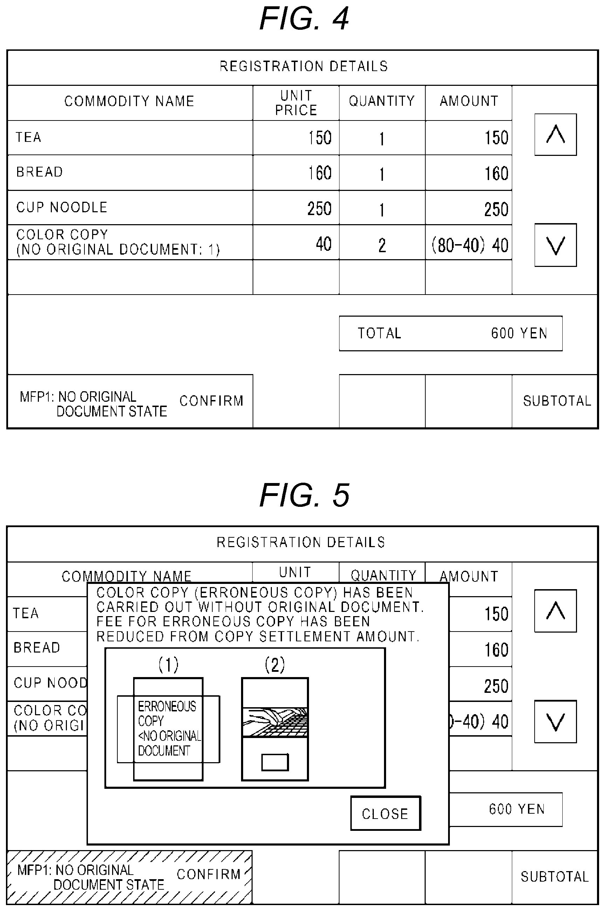

FIG. 4 shows an example of the settlement screen displayed by the display device 206 of the POS terminal 20. On the settlement screen shown in FIG. 4, commodity name, unit price, quantity and amount are displayed for each item and image processing to be settled together with the total settlement amount. In the example shown in FIG. 4, the settlement contents for color copy as the image processing to be charged executed by the image processing device 10 are displayed. The color copy shown in FIG. 4 has a unit price of 40 Yen and quantity of 2, but since there is one occasion of no original document, of which fee is reduced by 40 Yen, resulting in 80 - 40 = 40 Yen. In addition, on the settlement screen shown in FIG. 4, a confirmation key for confirming the read image in the image processing executed with the original document that is not set, is displayed.

When displaying the settlement screen including the reduction of the original document that is not set, the processor 201 displays a confirmation key for confirming the original document that is not set. When the confirmation key instructing confirmation of the original document that is not set is instructed (ACT 41, YES), the processor 201 displays the thumbnail image showing the read image in a state in which the original document is not set on the display device 206 (ACT 42) .

FIG. 5 is a diagram showing a display example of a confirmation screen for confirming a read image in image processing executed with the original document that is not set. In the example shown in FIG. 5, a confirmation screen indicating the read image in the image processing executed with the original document not set on the settlement screen shown in FIG. 4 is superimposed and displayed. In the display example shown in FIG. 5, the thumbnail image of the read image in the image processing executed in a state in which the original document is not set and the thumbnail image of the read image read next are displayed. In this way, it is possible to confirm the read image read with the original document not set and the next read image side by side. As a result, according to the confirmation screen as shown in FIG. 5, it is possible to clearly confirm that a reading mistake of the image (erroneous copy or erroneous scan) occurred due to an operation error.

When completing the confirmation of the settlement amount and the read image in a state in which the original document is not set, the processor 201 performs settlement processing of the settlement amount according to the operation of the clerk (ACT 43). In the settlement processing, the clerk receives a payment card or cash from the user and makes the POS terminal 20 execute the settlement processing.

For example, when receiving a card for settlement, the clerk sets a card for settlement in the card RW 207. In this case, the processor 201 accesses the settlement card through the card RW 207 and executes settlement of the settlement amount. In addition, when receiving cash, the clerk puts the received cash in the cash handling machine 208. In this case, the processor 201 receives the settlement amount by the cash handling machine 208 and discharges the change, thereby executing the settlement.

As described above, the POS terminal according to the first embodiment receives a notification indicating image processing that failed due to an operation error such as image processing executed with the original document that is not set from the image processing device. The POS terminal acquires the read image in the image processing that failed due to the operation error from the image processing device and saves the image. Furthermore, the POS terminal performs settlement by calculating a settlement amount obtained by calculating a settlement amount by subtracting a fee for image processing to be reduced such as image processing failed due to an operation error. In this way, it is possible to reduce the payment for failed image processing in the POS terminal while leaving the evidence of image processing failed due to an operation error such as image processing with the original document not set.

### Second Embodiment

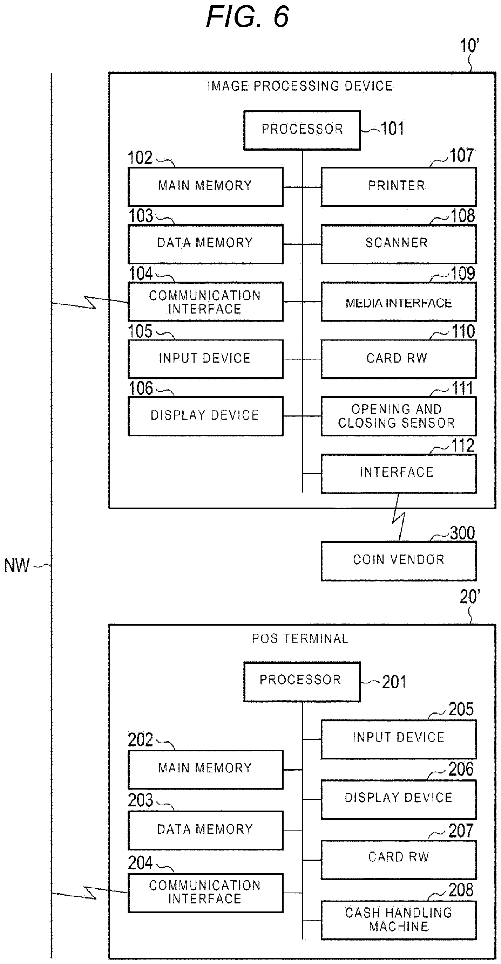

Next, an in-store system 1' according to a second embodiment will be described. FIG. 6 is a block diagram of the in-store system 1' according to the second embodiment. As shown in FIG. 6, the in-store system 1' according to the second embodiment is different from the in-store system 1 shown in FIG. 1 mainly in that a coin vendor 300 is connected to an image processing device 10'. In the configuration shown in FIG. 6, components that may be realized by the same components as those shown in FIG. 1 described in the first embodiment are denoted by the same reference numerals, and the detailed description thereof will be omitted.

As shown in FIG. 6, the in-store system 1' includes the image processing device 10', a POS terminal 20', and the coin vendor 300. The image processing device 10' includes an interface 112 that is connected to the coin vendor 300. In the image processing device 10', the processor 101 communicates with the coin vendor 300 via the interface 112. The coin vendor 300 is a device that accepts cash such as coins or bills and collects cash. The coin vendor 300 is used to collect the fee for image processing executed by the image processing device 10'.

For example, the image processing device 10' may execute image processing by the amount of cash inserted into the coin vendor 300. In addition, each time the image processing device 10' executes the image processing to be charged, the fee for the image processing executed is collected from the cash inserted to the coin vendor 300. In addition, instead of cash, the coin vendor 300 may accept a card for settlement such as a prepaid card or a credit card, and the fee may be settled by using the card. In addition, the fee for image processing executed by the image processing device 10' may be settled on the POS terminal 20' without using the coin vendor 300.

In the second embodiment, after collecting a fee corresponding to the executed image processing, it is assumed that the POS terminal 20' confirms the read image according to the request of the user and performs refund or reduction. That is, after paying the fee corresponding to the executed image processing, the user may receive a refund or a reduced amount of the amount of image processing that failed because the user forgets to set the original document in the POS terminal 20'.

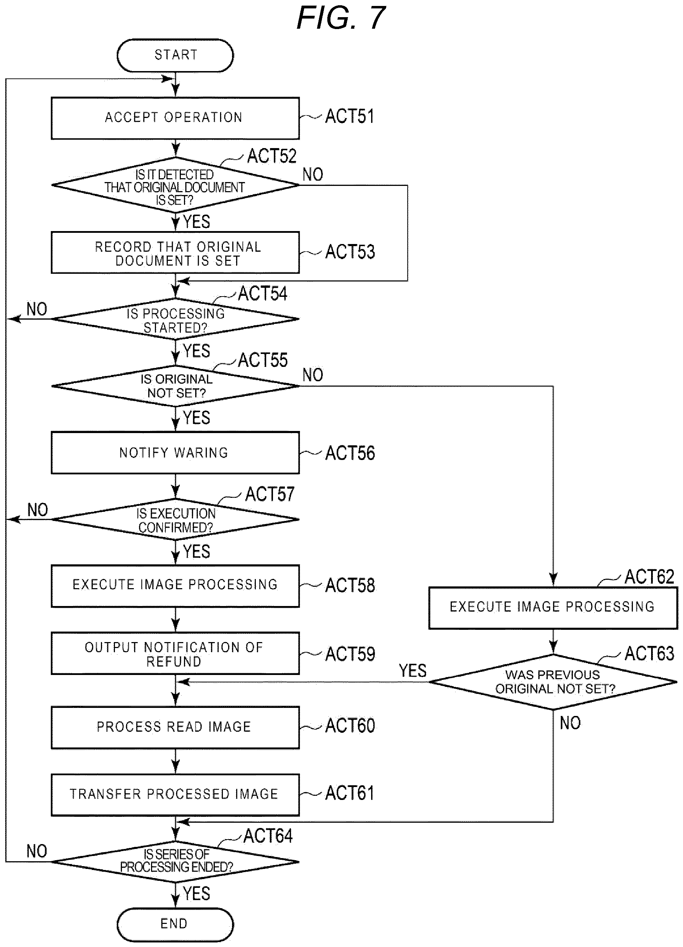

Next, the operation of the in-store system 1' according to the second embodiment will be described. FIG. 7 is a flowchart for explaining an operation example in the image processing device 10' according to the second embodiment. The processor 101 of the image processing device 10' makes image processing executable by a predetermined operation and receives various operations by the user (ACT 51). When the payment for image processing becomes ready for settlement, it is assumed that the processor 101 makes image processing executable. For example, when cash is input to the coin vendor 300, the processor 101 receives an operation from the user with the image processing device 10' in an available state. In addition, when a settlement card is presented on the card RW, the processor 101 may make the image processing device 10' available. In the following description, it is assumed that the processor 101 makes the image processing device 10' available in response to the cash input to the coin vendor 300.

In a state of receiving an operation by the user, the processor 101 is able to detect whether the original document is set in the document table (ACT 52) . The processor 101 determines that the original document is set in the document table according to the change in a detection signal of the opening and closing sensor 111. In addition, the processor 101 may detect that the original document is set in the document table by another detection method. For example, the processor 101 may detect a set of original documents according to a detection signal such as an original document sensor (for example, a sensor for detecting the original document size) on the document placement surface.

When it is detected that the original document is set (ACT 52, YES), the processor 101 records information indicating that the original document is set in the main memory 102 (ACT 53) . For example, the processor 101 may set a flag (e.g., original document set flag) as information indicating that the original document is set in the main memory 102. In addition, the processor 101 may record the information indicating the state in which the original document is set such as the original document set flag in the data memory 103.

In addition, in a state where an operation by the user is received, the processor 101 is able to receive an instruction to start image processing from the user (ACT 54). Here, an instruction to execute image processing including image reading processing on the document placement surface (i.e., the original document position) of the document table, is received. For example, the processor 101 receives an instruction to execute processing, such as scan or copy, input by the input device 105.

When receiving an instruction to start image processing (ACT 54, YES), the processor 101 refers to the main memory 102 and determines whether the original document is set (ACT 55) . If it is determined that the original document is in a state of being not set (ACT 55, YES), the processor 101 issues a warning that the original document is not set (ACT 56). For example, the processor 101 displays a warning screen indicating that the original document is not set on the display device 106 without executing the processing instructed to be executed. The processor 101 may make cause a warning sound and the like to be generated together with the warning screen.

In addition, the processor 101 prompts the user to provide the execution confirmation of the image processing together with the display of the warning screen, and receives an execution confirmation instruction (ACT 57). If there is an execution confirmation instruction with the original document still not set (ACT 57, YES), the processor 101 executes a specified image processing even if the original document set is not detected (ACT 58). When the image processing is normally completed, the processor 101 settles the fee for the image processing executed. For example, when the image processing is completed, the processor 101 collects the fee for image processing from the amount of money input to the coin vendor 300.

In addition, when executing the image processing with the original document still not set, the processor 101 outputs a confirmation sheet on which the notification that the image processing is executed in a state in which the original document is not set is printed (ACT 59). The processor 101 outputs the confirmation sheet on which the notification that the image processing is executed with the original document not set is printed by the printer 107. In addition, the processor 101 prints identification information for refunding the fee for the image processing on the confirmation sheet. For example, the identification information may be printed with a bar code or the like. In addition, the processor 101 may print the notification that refund is possible in the POS terminal 20', the thumbnail image, or the like to be described later on the confirmation sheet.

Furthermore, when the image processing is executed with the original document still not set, the processor 101 processes the read image read by the scanner 108 in the image processing as an image for transfer (ACT 60). As the transfer image, a thumbnail image similar to that described in the first embodiment may be acceptable.

After processing the read image, the processor 101 transfers the image information for confirmation including the processed image (e.g., the thumbnail image) to the POS terminal 20 through the network NW (ACT 61). The image information for confirmation includes the thumbnail image and information indicating that image processing is executed without the original document. In addition, the image information for confirmation may include information such as date and time when image processing is executed, identification information of the image processing device 10 that executes image processing.

In addition, if it is determined that the original document is set (ACT 55, NO), the processor 101 executes image processing instructed to be executed (ACT 62). In addition, when the image processing is normally completed, the processor 101 settles the fee for the image processing executed. For example, when the image processing is normally completed, the processor 101 collects the fee for image processing from the amount of money input to the coin vendor 300.

In this example of operation, when reading processing of the original document is executed in a state in which the original document is not set, it is assumed that the image read in the next reading processing is also transferred to the POS terminal 20. When the image processing is executed in a state in which the original document is not set, the processor 101 determines whether the original document is not set in the immediately preceding image processing (ACT 63). If it is determined that the original document is not set in the previous image processing (ACT 63, YES), the processor 101 processes the read image (ACT 60) and transfers the processed image to the POS terminal 20' (ACT 61).

The processor 101 may process the read image for all the image processing to be charged, generate a thumbnail image, and transfer the thumbnail image to the POS terminal 20'. In this case, in the POS terminal 20, it is possible to confirm the read image in all the image processing to be charged. In this case, in order to protect the privacy of the read image, the processor 101 may be a thumbnail image processed to such an extent that the contents of the read image may not be comprehensible.

In addition, the processor 101 receives an instruction to end processing by the user. When the user instructs the input device 105 to end the series of processing, the processor 101 determines to end the series of processing. The processor 101 determines to end the series of processing in accordance with the end instruction (ACT 64, YES) and ends the series of processing by the user. In addition, when ending a series of processing, the processor 101 returns the amount of money kept in the coin vendor 300 or the card for settlement.

As described above, in the image processing device according to the second embodiment, when execution of image processing is instructed with the original document not set, a warning that the original document is not set, is issued. In this way, it is possible to prevent the start of the image processing in a state in which the original document is not set. In addition, when image processing is executed with the original document not set, the image processing device according to the second embodiment sends the image read in the image processing to the POS terminal which functions as a settlement processing device. In this way, in the POS terminal, it is possible to confirm the read image in the image processing executed with the original document not set.

In addition, the image processing device according to the second embodiment outputs the confirmation sheet indicating that the image processing is executed with the original document not set. In this way, the user may confirm that the image processing is executed with the original document that is not set and the clerk may confirm that the user forgot to set the original document, for which the refund request is to be made.

Next, an operation example of the POS terminal 20' according to the second embodiment will be described. Here, it is assumed that the POS terminal 20' is operated by the clerk. In addition, it is assumed that the coin vendor 300 already paid for the image processing to be charged, which is executed by the image processing device 10'. In such an operation, the POS terminal 20' receives the image information for confirmation from the image processing device 10' and the like at any time and accepts refund processing at any timing.

The processor 201 receives the image information for confirmation including the thumbnail image transferred from the image processing device 10 via the network NW. When the image information for confirmation is received (ACT 71, YES), the processor 201 stores the received image information for confirmation in the data memory 203 (ACT 72) . For example, the processor 201 stores thumbnail images and identification information in the data memory 203 in order of date and time for each image processing device.

In addition, in response to a request from the user, the POS terminal 20 executes refund processing for image processing executed with the original document not set. When the confirmation sheet is output by the image processing device 10' , the user brings the confirmation sheet and requests refund from the clerk operating the POS terminal 20'. The clerk who receives the refund request from the user instructs the input device 205 of the POS terminal 20 to start refunding processing. The processor 201 starts refund processing in response to the instruction to start refund processing from the clerk.

When starting the refund processing, the processor 201 acquires identification information for identifying image processing to be refunded (ACT 74). For example, the processor 201 inputs identification information printed on the confirmation sheet presented by the user who requests refund. The processor 201 may acquire the identification information that the clerk inputs by using the input device 205. In addition, when printing a barcode including identification information on the confirmation sheet, the processor 201 may acquire the barcode image read by the scanner and acquire the identification information indicated by the barcode.

When acquiring the identification information, the processor 201 displays the thumbnail image corresponding to the image processing identified by the acquired identification information on the display device 206 (ACT 75). For example, the processor 201 identifies the thumbnail image of image processing corresponding to the identification information in the data memory 203 and displays the identified thumbnail image.

The processor 201 may display the thumbnail images searched with information other than the identification information corresponding to the image processing on the display device 206. For example, the processor 201 may display the retrieved thumbnail based on specified date and time images on the display device 206. In addition, the processor 201 may display thumbnail images to be searched based on a specified image processing device on the display device 206.

When the thumbnail image of the image processing is displayed, the processor 201 accepts an instruction indicating whether refund is possible or not (ACT 76). For example, the clerk who is the operator of the POS terminal 20' determines whether to make a refund by referring to the confirmation sheet presented by the user, thumbnail image displayed on the display device 206 and the like. The clerk uses the input device 205 to input an instruction that refund is permitted when determining that refund is possible and inputs an instruction that refund is not permitted when determining that refund is not possible.

When an instruction that refund is possible is input by the input device 205, the processor 201 executes refund processing of refunding a predetermined amount to the user (ACT 77). For example, as refund processing, the processor 201 releases the amount to be refunded by the cash handling machine 208. In addition, as refund processing, the processor 201 may record information such as a refund amount on the card presented by the user.

By the above processing, the POS terminal according to the second embodiment causes the display device to display a thumbnail screen showing the read image of the image processing executed with the original document not set. In this way, it is possible to confirm the image processing that fails because the user forgets to set the original document and to refund or reduce the fee for image processing or the like after confirming the failure.

The above-described first and second embodiments may also be modified as follows. A part of the processing performed by the image processing devices 10 and 10' described above may be performed by a computer such as a PC or a server communicatively connected to the image processing devices 10 and 10'. A part of the processing performed by the POS terminals 20 and 20' described above may be performed by a computer (not shown) such as a PC or a server communicatively connected to the POS terminals 20 and 20'.

In addition, instead of the POS terminal 20 or 20', the in-store systems 1 and 1' may be constituted by a terminal device such as an electronic cash register or the like. In addition, the in-store system 1 or 1' may be installed in a facility other than a store such as a library. In this case, instead of the POS terminal, the in-store systems 1 and 1' include a PC or a dedicated terminal for operating by an official of the facility or the like. The PC or dedicated terminal is an example of a terminal device.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. An image processing machine with usage tracking comprising:
a communication interface;
a document table having a document placement surface;
a scanner configured to read an image of a document placed on the document placement surface; and
a processor that is configured to determine whether or not the document is set on the document placement surface upon receiving an instruction to perform image reading by the scanner, and transmit a thumbnail image that is processed from the image read by the scanner upon determining that the document is determined to be not set on the document placement surface, to a processing device through the communication interface, so as to improve the usage tracking feature of the image processing machine.

2. The image processing machine according to claim 1, further comprising:
a printer,
wherein the processor is configured to control the printer to output a sheet on which information indicating that image processing has been executed in a state in which the original is not set on the document placement surface during the image reading by the scanner.

3. The image processing machine according to claim 1 or 2, further comprising:
a cover that opens to expose the document table and closes to cover the document table; and
a sensor configured to detect opening and closing of the cover,
wherein the processor determines that the original is not set on the document placement surface based on outputs from the sensor.

4. The image processing machine according to any of claims 1 to 3, further comprising:
a display device,
wherein the processor is configured to cause a warning to be displayed on the display device upon determining that that the original is not set on the document placement surface.

5. The image processing machine according to any of claims 1 to 4, wherein the processor is configured to transmit a thumbnail image of a document that is set on the document placement surface to said processing device through the communication interface.

6. The image processing machine according to any of claims 1 to 5, wherein the next image reading performed in sequence by the scanner after the image reading when the document is not set on the document placement surface, is the image reading on the document that is set on the document placement surface.

7. An image processing system comprising:
an image processing machine configured to perform image processing with usage tracking; and
a point-of-sale (POS) terminal that is connected to the image processing machine through a network,
wherein the image processing machine includes
a communication interface;
a document table having a document placement surface;
a scanner configured to read an image of a document placed on the document placement surface; and
a processor that is configured to determine whether or not the document is set on the document placement surface upon receiving an instruction to perform image reading by the scanner, and transmit a thumbnail image that is processed from the image read by the scanner upon determining that the document is determined to be not set on the document placement surface, to the POS terminal through the communication interface, so as to improve the usage tracking feature of the image processing machine.

8. The system according to claim 7, wherein the image processing machine further comprises:
a printer,
wherein the processor is configured to control the printer to output a sheet on which information indicating that image processing has been executed in a state in which the original is not set on the document placement surface during the image reading by the scanner.

9. The system according to claim 7 or 8, wherein the image processing machine further comprises:
a cover that opens to expose the document table and closes to cover the document table; and
a sensor configured to detect opening and closing of the cover,
wherein the processor determines that the original is not set on the document placement surface based on outputs from the sensor.

10. The system according to any of claims 7 to 9, wherein the image processing machine further comprises:
a display device,
wherein the processor is configured to cause a warning to be displayed on the display device upon determining that that the original is not set on the document placement surface.

11. The system according to any of claims 7 to 10, wherein the processor is configured to transmit a thumbnail image of a document that is set on the document placement surface to said processing device through the communication interface.

12. The system according to claim 11, wherein the next image reading performed in sequence by the scanner after the image reading when the document is not set on the document placement surface, is the image reading on the document that is set on the document placement surface.

13. An image processing method carried out in an image processing machine with usage tracking, the image processing machine including a communication interface, a document table having a document placement surface, and a scanner configured to read an image of a document placed on the document placement surface, said method comprising:
scanning the document placement surface and generating a read image as a result of the scanning;
determining whether or not the document is set on the document placement surface during the scanning; and
transmitting a thumbnail image that is processed from the read image upon determining that the document is determined to be not set on the document placement surface during the scanning, to a processing device through the communication interface, so as to improve the usage tracking feature of the image processing machine.

14. The method according to claim 13, wherein the image processing machine further comprises a printer, and said method further comprises:
controlling the printer to output a sheet on which information indicating that image processing has been executed in a state in which the original is not set on the document placement surface during the scanning.

15. The method according to claim 13, wherein the image processing machine further comprises a cover that opens to expose the document table and closes to cover the document table, and a sensor configured to detect opening and closing of the cover, and the original is determined to be not set on the document placement surface based on outputs from the sensor.
